# EUROPEAN PATENT SPECIFICATION

(11) **EP 3 750 678 B1**
(45) Date of publication and mention of the grant of the patent: **15.02.2023**
(21) Application number: 20178271.1
(22) Date of filing: 04.06.2020
(51) Int. Cl.: B28B 1/00, B28B 13/02, B30B 15/30, B41J 3/407, B32B 18/00, B41J 11/00

(54) **METHOD AND PLANT FOR MANUFACTURING MASS-DECORATED CERAMIC SLABS**
VERFAHREN UND ANLAGE ZUR HERSTELLUNG VON MASSEDEKORIERTEN KERAMIKPLATTEN
PROCÉDÉ ET INSTALLATION DE FABRICATION DE DALLES EN CÉRAMIQUE DÉCORÉES EN SÉRIE

(30) Priority: 11.06.2019 IT 201900008640
(43) Date of publication of application: 16.12.2020
(73) Proprietor: Granitifiandre Societa' Per Azioni, 42014 Castellarano (RE) (IT)
(72) Inventor: MARCHI, Domenico, 42031 BAISO (RE) (IT)
(74) Representative: Corradini, Corrado

(56) References cited:
- EP-A1- 2 839 957
- EP-A2- 1 977 872
- CN-A- 104 308 969

## Description

### Technical Field

The present invention relates to a method and a plant for manufacturing ceramic slabs. In particular, the invention relates to a method and a plant which allow manufacturing ceramic slabs having particular graphic characteristics, such as for example veining which reproduces the veins of marble or natural stones.

### Background

One of the most currently widespread methods for manufacturing ceramic slabs, especially large ceramic slabs, is that which envisages the provision of a soft coat or belt of ceramic powders, typically of atomised ceramics, on top of a sliding support belt and subsequently, pressing said soft coat of ceramic powders directly on said sliding belt.

In some embodiments, the pressing step can be performed by means of a continuous ceramic press, which generally comprises a sliding compactor belt which is superimposed on the soft coat of ceramic powder carried by the sliding support belt.

The two sliding belts are made to pass through two pressing rollers, or through two groups of pressing rollers, which push the sliding compactor belt towards the sliding support belt and allow it to press the soft layer of ceramic powder, obtaining a compact slab of pressed ceramic powder at the outlet.

Instead of a continuous press, other embodiments can use special discontinuous presses, such as those commercially known as GEA System or Supera Siti B&T.

In both cases, the compact slab obtained with the pressing step can subsequently be subjected to the usual drying, decoration and lastly firing steps inside a ceramic furnace. During the decoration step, which can be performed with the aid of special digital printing machines, it is possible to create graphic effects on the surface of the compacted slab that reproduce the veining of marble or other precious natural stones.

However, unlike the veining of natural stones, those obtained with this decorative technique do not penetrate into the thickness of the material but remain confined exclusively to the external surface of the ceramic slab.

This means that if the ceramic slab is superficially polished or abraded, the veining is irremediably erased or otherwise compromised.

Furthermore, while the veining of natural stones sometimes has blurred contours, due to a certain transparency effect that allows a glimpse of the lower layers of the veining, those obtained with the current decorative techniques stand out quite markedly on the surface and do not allow obtaining the same blurred effect.

EP 1 977 872 A2 discloses a method and a plant for manufacturing ceramic slabs according to the preambles of claims 1 and 9, respectively.

### Disclosure of the invention

In light of the above, an object of the present invention is to allow the decoration of ceramic slabs, even deep into the thickness of the slab, for example, but not necessarily, in order to obtain a veined effect which is more similar to that of marble or other natural stones.

A further object is that of achieving the mentioned objective within the context of a simple, rational and relatively cost-effective solution.

These and other objects are reached thanks to the characteristics of the invention as set forth in the independent claims. The dependent claims outline preferred and/or particularly advantageous aspects of the invention.

In particular, the present invention provides a method for manufacturing ceramic slabs, comprising the steps of:
- realising a soft coat of ceramic powder on a support surface, and
- pressing said soft coat of ceramic powder so as to obtain a compact slab of pressed ceramic powder,
wherein the realisation of the soft coat of ceramic powder comprises the steps of:
- forming a first layer of ceramic powder on the support surface,
- distributing at least one ceramic dye on said first layer of ceramic powder,
- forming at least one second layer of ceramic powder on said first layer of ceramic powder, and
- distributing at least one ceramic dye on said second layer of ceramic powder.

Thanks to this solution, before the pressing step, it is advantageously possible to colour the ceramic powder grains which are inside the soft coat of ceramic powder, with the consequent possibility of obtaining mass-decorated ceramic slabs, for example which have dyed veining that also extends into the thickness of the slab, as occurs in slabs of marble or other natural stones.

Naturally, the realisation of the soft layer of ceramic powder is not limited to the formation of two superimposed layers but can envisage forming, above the first layer of ceramic powder, any number of superimposed layers, performing, after forming each layer and possibly before forming the next layer (if provided), a step for distributing the ceramic dye, until a soft coat of ceramic powder having any desired thickness is obtained. According to one aspect of the invention, the ceramic dye can be distributed on each layer of ceramic powder in an amount such as to colour the ceramic powder for the entire thickness of the layer itself.

In this way, it is advantageously possible to completely, or almost completely, colour the individual ceramic powder grains on which the ceramic dye is dispensed.

In this regard, it is preferable that the thickness of each layer of ceramic powder is less than or equal to 5 mm.

Thanks to this solution, each layer of ceramic powder is very thin, thus facilitating the diffusion of the ceramic dye throughout the thickness of the same.

According to another aspect of the invention, the ceramic dye can be a liquid ceramic ink.

In this way it is possible to obtain a more uniform colouring of the ceramic powder grains of each layer.

However, it is not excluded that in other embodiments, the ceramic dye can be dry. Another aspect of the invention provides that the ceramic dye can be selectively distributed on each layer of ceramic powder.

In other words, the ceramic dye can be dispensed only on some portions of each layer of ceramic powder, while the remaining portions are not dyed and remain of the typically neutral colouring of the base ceramic powder.

In particular, the ceramic dye can be distributed on each layer of ceramic powder to create a predetermined graphic design, for example but not necessarily a veining reproducing the veining of marble or other natural stones.

According to one aspect of the invention it is preferable that the graphic design created on each layer of ceramic powder is substantially the same and is superimposed on the design created on each other layer of ceramic powder.

Thanks to this solution, even if the surface of the ceramic slab were polished or abraded, the graphic design (for example veining) would remain visible all the same.

Another aspect of the invention provides that the method can comprise the step of distributing multiple ceramic dyes, each having different colours from the other, on each layer of ceramic powder.

Thanks to this solution, it is advantageously possible to create, with the same methods outlined above, multicoloured graphic designs, significantly increasing the range of decorations that can be realised on the final ceramic slab.

In particular, it is preferable to distribute on each layer of ceramic powder at least two or three, more preferably at least four or five, ceramic dyes of different colours, for example chosen in the group (CMYKW) consisting of: cyan, magenta, yellow, black and white.

In this way, by combining and possibly superimposing these ceramic dyes on the same areas of each layer of ceramic powder, it is advantageously possible to obtain polychromatic graphic designs, without greatly increasing the number of dyes to be used. According to a different aspect of the present invention, at least one (preferably each) layer of ceramic powder can be formed through the steps of:
- releasing the ceramic powder from a powder dispensing device located above the support surface, for example from a hopper or any other apparatus suitable for the purpose, and
- reciprocally moving said powder dispensing device and said support surface in a direction parallel to the support surface itself (typically horizontal).

Thanks to this solution, it is advantageously possible to realise the layer of ceramic powder in a rather simple and rapid manner and in a relatively small space.

Of course, the reciprocal movement of the powder dispensing device and the support surface can be obtained in different ways, for example by moving the powder dispensing device and leaving the support surface stationary, or by moving the support surface and leaving the powder dispensing device stationary, or by moving both the powder dispensing device and the support surface but in different directions and/or at different speeds.

Another aspect of the invention similarly envisages that at least one (preferably each) step of distributing the ceramic dye can be obtained through the steps of:
- releasing the ceramic dye from a dye dispensing device located above the support surface, for example from a digital printing machine, and
- reciprocally moving said dye dispensing device and said support surface in a direction parallel to the support surface itself (typically horizontal).

Thanks to this solution, it is advantageously possible to dispense the ceramic dye in a rather simple and rapid manner and in a relatively small space.

Also in this case, the reciprocal movement between the dye dispensing device and the support surface can be obtained in different ways, for example by moving the dye dispensing device and leaving the support surface stationary, or by moving the support surface and leaving the dye dispensing device stationary, or by moving both the dye dispensing device and the support surface but in different directions and/or at different speeds.

As far the subsequent pressing step is concerned, this step can involve pressing the soft coat of ceramic powder directly against the support surface.

For example, it is possible to advance the support surface along a predetermined advancement direction parallel to the support surface itself (typically horizontal) and to press the soft coat of ceramic powder as it advances with the support surface, for example by means of a continuous ceramic press.

Alternatively, the pressing step can take place while the support surface is stationary, for example by means of a discontinuous ceramic press (e.g. of the GEA System type, Supera Siti B&T or others).

After the pressing step, the method can comprise the step of subjecting the compact slab of pressed ceramic powder to a firing process inside a ceramic furnace.

Before this firing step, the compact slab of pressed ceramic powder can however be cut, for example to trim it along the edges or to divide it into smaller slabs, and/or subjected to a drying and/or surface decoration process.

Another embodiment of the present invention provides a plant for manufacturing ceramic slabs, comprising at least:
- a support surface,
- an apparatus for realising a soft coat of ceramic powder on said support surface,
- a ceramic press for pressing said soft coat of ceramic powder so as to obtain a compact slab of pressed ceramic powder,
- a ceramic furnace for receiving the compact slab of pressed ceramic powder and subject it to a firing stage,
wherein said apparatus for realising the soft coat of ceramic powder comprises:
- means for forming a first layer of ceramic powder on the support surface,
- means for distributing at least one ceramic dye on said first layer of ceramic powder,
- means for forming at least one second layer of ceramic powder on said first layer of ceramic powder, and
- means for distributing at least one ceramic dye on said second layer of ceramic powder.

This plant allows realising the method described above and the same effects substantially follow.

All the auxiliary aspects of the invention which have been described with reference to the method are naturally intended to be applicable, *mutatis mutandis,* also to this plant.

In particular, one aspect of the present invention provides that the means for forming the first layer of ceramic powder and the means for forming the second layer of ceramic powder can comprise at least one powder dispensing device located above the support surface, and movement members configured to move said powder dispensing device with a reciprocating motion along an advancement direction parallel to the support surface, cyclically performing a forward stroke in one direction and a return stroke in the opposite direction.

In this way, it is advantageously possible to realise each layer of ceramic powder in a rather simple and rapid manner and in a relatively small space.

Another aspect of the present invention provides, similarly, that the means for distributing the ceramic dye on the first layer of powder and the means for distributing the ceramic dye on the second layer of ceramic powder can comprise at least one dye dispensing device located above the support surface, and movement members configured to move said dye dispensing device with a reciprocating motion along an advancement direction parallel to the support surface, cyclically performing a forward stroke in one direction and a return stroke in the opposite direction.

In this way, it is advantageously possible to complete the dispensing of the ceramic dye in a rather simple and rapid manner and in a relatively small space.

One preferred aspect of the invention provides, however, that the means for forming the first layer of ceramic powder and the means for forming the second layer of ceramic powder can comprise two of said powder dispensing devices adapted to move in the same advancement direction, and that the means for distributing the ceramic dye on the first layer of powder and the means for distributing the ceramic dye on the second layer of ceramic powder can comprise a single dye dispensing device, which is adapted to move in the same advancement direction as the powder dispensing devices and is interposed between the latter, with respect to said advancement direction.

In this way, the two powder dispensing devices and the single dye dispensing device can be operated to perform, one after the other or simultaneously, first a forward stroke in a predetermined direction along the advancement direction and, subsequently, a return stroke in the opposite direction.

During the forward stroke, the powder dispensing device which is in the forward position (with respect to the sliding direction) can form the first layer of ceramic powder, the dye dispensing device which is in the intermediate position can distribute the ceramic dye on the first layer of freshly formed ceramic powder, while the powder dispensing device in the rear position can remain inactive.

During the return stroke, the powder dispensing device which is in the forward position (with respect to the sliding direction), i.e. the one that was previously in the rear position, can form the second layer of ceramic powder, the dye dispensing device located in the intermediate position can distribute the ceramic dye directly on the second layer of freshly formed ceramic powder, while the powder dispensing device that is in the rear position, i.e. the one that was previously in the forward position, can remain inactive. Obviously, if there are more than two layers of ceramic powder forming the soft coat, these forward and return strokes of the powder and dye dispensing devices can be repeated several times.

In this way, each stroke of the powder dispensing and dye dispensing devices corresponds to the execution of a step of forming the layer of ceramic powder and a step of distributing the ceramic dye thereon, thereby significantly reducing the time required to complete the realisation of the final soft coat.

In other embodiments, the same advantage can be obtained if the means for distributing the ceramic dye on the first layer of powder and the means for distributing the ceramic dye on the second layer of ceramic powder comprise two dye dispensing devices adapted to move in the same advancement direction, and the means for forming the first layer of ceramic powder and the means for forming the second layer of ceramic powder comprise a single powder dispensing device, which is adapted to move in the same advancement direction as the dye dispensing devices and is interposed among the latter, with respect to said advancement direction.

In this case, during the forward stroke, the dye dispensing device which is in the forward position (with respect to the sliding direction) could remain inactive, the dye dispensing device which is in the intermediate position could form the first layer of ceramic powder, while the dye dispensing device located in the rear position could distribute the ceramic dye directly on the first layer of ceramic powder.

During the return stroke, the dye dispensing device which is in the forward position (with respect to the sliding direction), i.e. the one that was previously in the rear position, could remain inactive, the powder dispensing device which is in the intermediate position could form the second layer of ceramic powder, while the dye dispensing device that is in the rear position, i.e. the one which was previously in the forward position, could distribute the ceramic dye directly on the second layer of ceramic powder.

In this case, however, the presence of two dye dispensing devices could increase the overall cost of the plant.

In this regard, one aspect of the invention provides that said dye dispensing device can be a digital printing machine.

This type of machine has a great versatility of use and, through a suitable programming, allows realising substantially any graphic design.

For example, said digital printing machine can comprise:
- a support structure adapted to move in said advancement direction,
- at least one printing head carried by the support structure and adapted to dispense the ceramic dye, and
- movement members adapted to move said printing head, on the support structure, in a direction parallel to the support surface and transverse, for example orthogonal, with respect to the advancement direction of the support structure.

Thanks to this solution, the digital printing machine is able to dispense the ceramic dye on all the points of the ceramic powder layers, creating any design or graphic pattern. According to another aspect of the invention, the movement members of the powder dispensing devices and the movement members of the dye dispensing device can comprise a linear electric motor.

This solution allows high movement precision in a particularly reduced area.

A further aspect of the invention envisages that the support surface can be provided by a conveyor belt adapted to slide in a predetermined sliding direction, for example in a sliding direction parallel to the advancement direction of the powder dispensing device. In this way it is advantageously possible to carry out an in-line production of the ceramic slabs.

According to a different aspect of the invention, the press for pressing the soft coat of ceramic powder can be adapted to press the soft coat of ceramic powder directly on the support surface.

For example, the press can be a continuous press or a discontinuous press.

The plant comprises a ceramic furnace adapted to subject the compact slab of pressed ceramic powders to a firing step.

Between the press and the ceramic furnace, the plant can possibly comprise an apparatus for cutting the compact slab of pressed ceramic powders, for example to divide it into smaller slabs and/or to trim it along the edges, and/or an apparatus to subject the compact slab of pressed powders, or possibly the smaller slabs obtained from the cutting, to a drying step and/or a surface decoration step.

### Brief description of the drawings

Further features and advantages of the invention will be more apparent after reading the following description provided by way of non-limiting example, with the aid of the accompanying drawings.
Figures 1 to 5 show as many steps of a method for manufacturing ceramic slabs according to one embodiment of the present invention.
Figures 1a to 1e show as many sub-steps which can be performed to carry out the step illustrated in figure 1.
Figure 6 is a perspective view of a plant for carrying out the method of figures 1-5.
Figure 7 is a side view of the plant of figure 6.
Figure 8 is a plan view of the plant of figure 6.
Figure 9 shows, according to the side view of figure 7, an apparatus of the plant of figure 1 designed to carry out the steps of figures 1a-1e.
Figures 10 to 12 show the apparatus of figure 9 in as many operating steps during its operation.

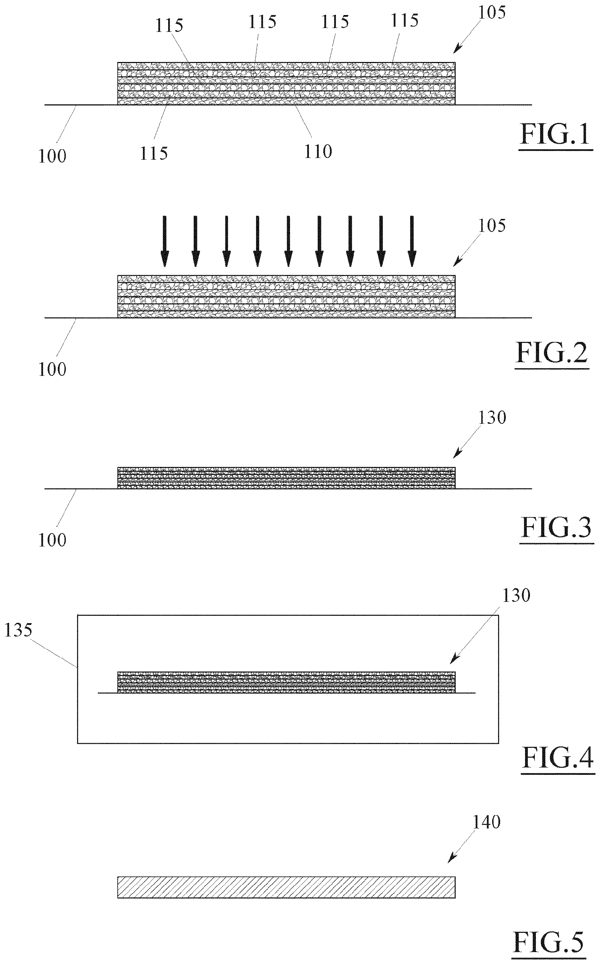

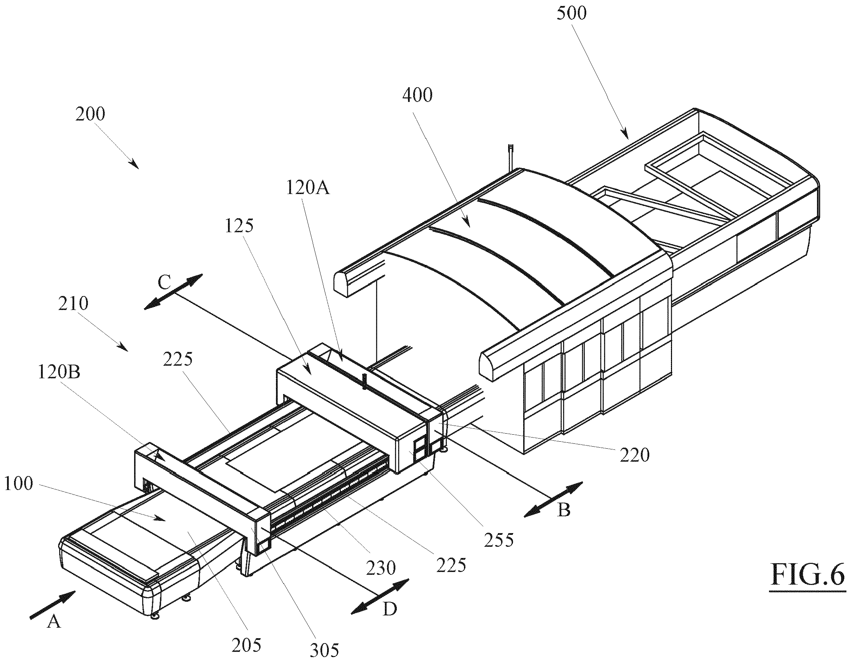

Figure 3 is a schematic side view showing the press and the ceramic furnace which can be installed in the plant of figure 6.

### Detailed description

With the aid of the aforementioned figures a method and a plant for manufacturing ceramic slabs is described, typically large ceramic slabs for covering floors and/or walls. The method in question firstly envisages providing a support surface 100, typically a flat surface and preferably oriented horizontally.

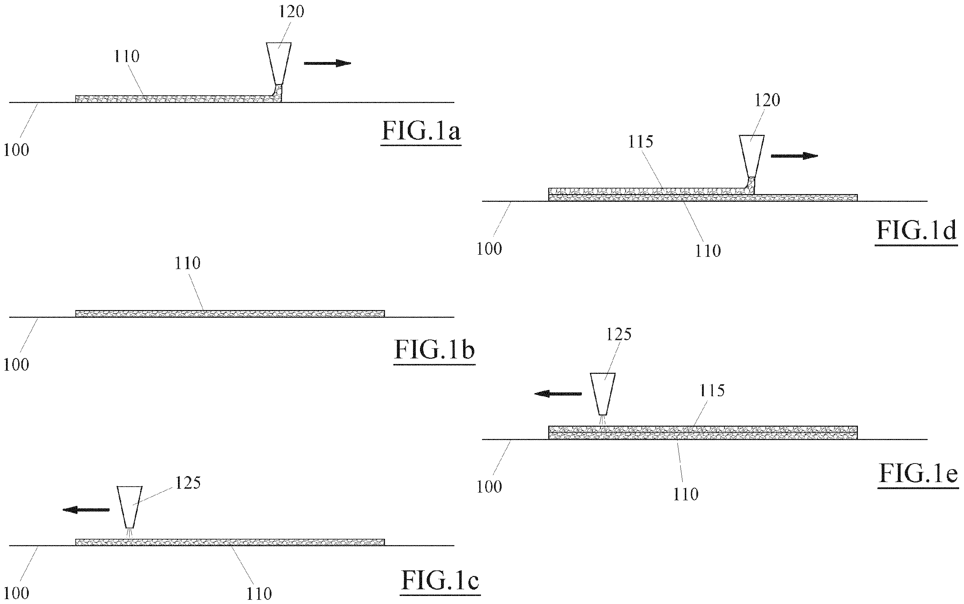

A soft coat 105 of ceramic powder is realised on this support surface 100 (see fig.1). The ceramic powder can be obtained by grinding a mixture of raw ceramic materials, including for example clays, talc, silica, feldspar minerals, carbonates, micas, glass materials, etc.

The mixture of raw ceramic materials can be dry-ground, directly obtaining the ceramic powder, or it can be wet-ground and then subjected to a drying process inside an atomiser.

In the present discussion, the ceramic powder is preferably obtained with the second method outlined above and therefore takes the name of "atomised".

The ceramic powder is preferably "neutral", i.e. obtained without the addition of pigments or other dyes, so that its colour (generally light grey) is the natural colour of the mixture of raw ceramic materials that have been ground and atomised.

The coat 105 is defined as "soft" in the sense that it is formed by non-pressed ceramic powder.

To make the soft coat 105, the method envisages forming a first layer 110 of ceramic powder on the support surface 100 (see figs.1a/1b).

A ceramic dye is subsequently distributed on said first layer 110 of ceramic powder (see fig.1c).

After the distribution of the ceramic dye, at least a second layer 115 of ceramic powder is formed above the first layer 110 of ceramic powder (see fig.1d), on which the ceramic dye is then again distributed (see fig. 1d).

At this point it is possible to repeat the previous steps, so as to superimpose a plurality of second layers 115 of ceramic powder on the first layer 110, mutually superimposed on each other, until reaching a predetermined thickness of the soft coat 105 (see fig.1). Naturally it should be noted that after the formation of each of these second layers 115 of ceramic powder and before the possible formation of another second layer 115 superimposed thereon, the method always provides a step of distributing the ceramic dye on the last second layer 115 of freshly formed ceramic powder.

Each of the layers 110 and 115 of ceramic powder mentioned above can individually have a thickness less than or equal to 5 mm.

In general terms, each layer of ceramic powder 110 and 115 can be formed by releasing the ceramic powder from a powder dispensing device 120 located above the support surface 100, and simultaneously moving the powder dispensing device 120 and said support surface 100 in an advancement direction parallel to the support surface 100 itself.

For example, it is possible to move the powder dispensing device 120, leaving the support surface 100 stationary, or to move the support surface 100 while leaving the powder dispensing device 120 stationary, or alternatively to move both the powder dispensing device 120 and the support surface 100 but in different directions and/or at different speeds.

Similarly, the distribution of the ceramic dye on each layer of ceramic powder 110 and 115 can be obtained by pouring the ceramic dye from a dye dispensing device 125 located above the support surface 100, and reciprocally moving said dye dispensing device 125 and said support surface 100 in an advancement direction parallel to the support surface 100 itself.

For example, it is possible to move the dye dispensing device 125, leaving the support surface 100 stationary, or to move the support surface 100 while leaving the dye dispensing device 125 stationary, or alternatively to move both the dye dispensing device 125 and the support surface 100 but in different directions and/or at different speeds. During each step of dispensing the ceramic dye, only one ceramic dye can be dispensed, or multiple ceramic dyes can be dispensed.

In the case where multiple ceramic dyes are dispensed, the latter preferably have different colours, for example cyan, magenta, yellow, black and white (CMYKW), so that their possible combination can give rise to a wide range of colour tones.

Each ceramic dye can be a dry ceramic dye, for example comprising ceramic pigments capable of adhering directly to the grains of the ceramic powder.

More preferably, each ceramic dye is however a wet or liquid ceramic ink, which can be obtained as a dispersion of ceramic pigments inside a liquid vehicle, such as for example water, glycol and/or other organic liquids.

In this way, the ceramic ink wets the grains of ceramic powder, colouring them.

The amount of ceramic dye which is dispensed per surface unit on each layer of ceramic powder 110 and 115 is preferably selected so as to be able to colour the grains of ceramic powder along the entire thickness of the layer itself.

In other words, the quantity of ceramic dye that is dispensed (e.g. sprayed) on a unitary area of the surface of the layer of ceramic powder should preferably be able to penetrate into the thickness of said layer and colour, completely or at least partially, all (or almost all) of the grains of ceramic powder that subtend the aforementioned unitary area of the surface.

This penetration of the ceramic dye into the thickness of the layer of ceramic powder is clearly favoured by the reduced thickness of the layer itself.

The ceramic dye can be selectively distributed on each layer of ceramic powder 110 and 115 to create a predetermined graphic design, for example but not necessarily one or more veinings reproducing marble or other natural stones.

The graphic design created on each layer of ceramic powder 110 and 115 is preferably the same and is superimposed (or almost superimposed) on the graphic design that is created on all the other layers of ceramic powder that form the soft coat 105, so as to be reproduced in a substantially identical way throughout the thickness of the soft coat 105 itself.

Once the realisation of the soft coat 105 of ceramic powder has been completed, the method envisages subjecting said soft coat 105 to a pressing step (see fig.2), so as to obtain a compact slab 130 of pressed ceramic powder (see fig.3).

This pressing step can take place by pressing the soft coat 105 directly on and against the support surface 100.

The pressure with which the soft coat 105 is pressed can vary depending on the materials used, from a minimum of 150 kg/cm² (kilograms per square centimetre) to a maximum of 600 kg/cm².

For example, in the case of porcelain stoneware, the pressure exerted on the soft coat 105 can be between 300 kg/cm² and 450 kg/cm², more preferably between 350 kg/cm² and 450 kg/cm² (extremes included).

After the pressing step, the compact slab 130 of pressed ceramic powder can be subjected to a firing step in a ceramic furnace 135 (see fig.4), so as to obtain the final ceramic slab 140 (see fig. 5).

This firing step generally envisages heating the compact slab 130 up to a predetermined maximum temperature, which can vary between 800°C and 1400°C depending on the composition of the ceramic powder, and maintaining it at said maximum temperature for a given time.

Before this firing step, the compact slab 130 can optionally be cut, for example to trim its edges and/or to divide it into smaller slabs, and/or subjected to further steps in the production process, including for example a drying step and a possible decoration and/or glazing step.

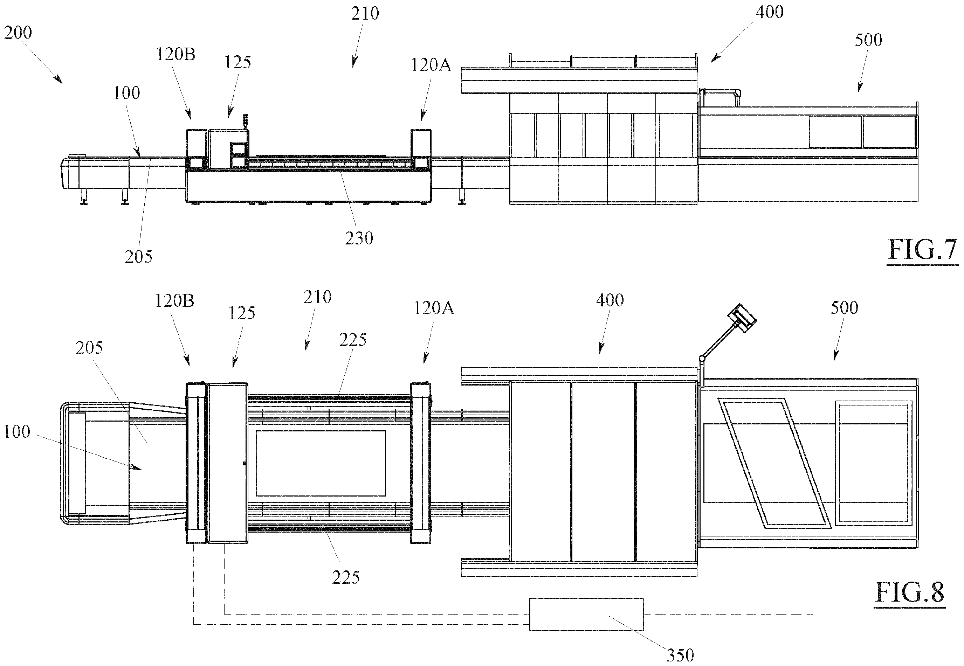

To carry out the method outlined above, it is possible to use a plant 200 like the one illustrated in figures 6 to 13.

The plant 200 can comprise a conveyor belt 205, which is preferably oriented on a horizontal plane and is adapted to define the support surface 100.

The conveyor belt 205 is associated with suitable actuation members, for example an electric motor, which are adapted to make it slide in a predetermined sliding direction A. In particular, the conveyor belt 205 can be conventionally wound around a plurality of rollers or return wheels with a horizontal axis (at least one of which is motorised), which engage it to slide in a closed path which generally comprises an operating section, wherein the conveyor belt 205 is facing upwards to be able to support the ceramic powder, and a return section, wherein the conveyor belt 205 is facing downwards.

For the sake of brevity, in the present description the conveyor belt 205 is identified with its operating section and, consequently, the sliding direction A refers to the sliding direction of the conveyor belt 205 in the operating section.

The plant 200 further comprises an apparatus, generally indicated with 210, for realising the soft coat 105 of ceramic powder on the support surface 100 provided by the conveyor belt 205.

The apparatus 210 can comprise a first powder dispensing device 120A, for example a hopper or any other device suitable for the purpose, which is located above the conveyor belt 205 and is adapted to pour ceramic powder onto the same.

The first powder dispensing device 120A can be associated with suitable actuation members adapted to move it above the conveyor belt 205 along a predetermined advancement direction B.

The advancement direction B of the first powder dispensing device 120A is preferably parallel to the sliding direction A of the conveyor belt 205.

However, it is not excluded that in other embodiments the advancement direction B of the first powder dispensing device 120A, while remaining parallel to the support surface 100 defined by the conveyor belt 205, can be oriented transversely, for example orthogonally, with respect to the sliding direction A.

In any case, along the advancement direction B, the actuation members can be adapted to move the first powder dispensing device 120A with a reciprocating motion, making it cyclically perform a forward stroke followed by a return stroke.

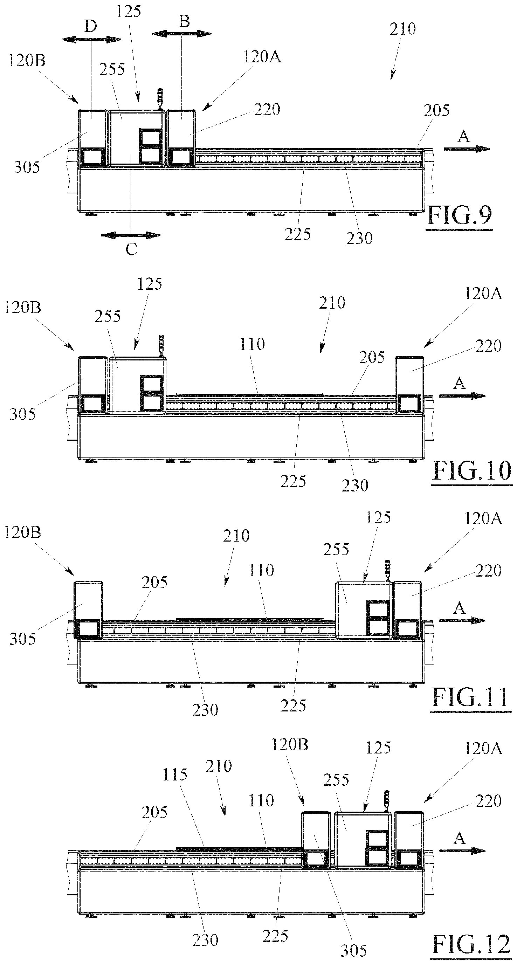

During the forward stroke, the first powder dispensing device 120A is moved in a predetermined direction (for example in the same direction as the sliding of the conveyor belt 205) starting from a first endstroke position, illustrated in figure 9, up to reaching a second endstroke position, illustrated in figure 10.

During the return stroke, the first powder dispensing device 120A is moved in the opposite direction from the second endstroke position back to the first endstroke position.

To allow these movements, the first powder dispensing device 120A can be supported by a support structure 220, for example bridge-shaped, which transversely surmounts the conveyor belt 205 and which is slidably coupled to two rectilinear guides 225, oriented parallel to the advancement direction B and fixed on opposite sides of the conveyor belt 205 itself.

The actuation members of the first powder dispensing device 120A can comprise at least one linear electric motor.

An electric linear motor is substantially an electric motor that has had its stator and rotor "unrolled" instead of being circular, and instead of producing a torque produce a force. In this case, the stator 230 of the linear electric motor can be arranged parallel to the advancement direction B, for example beside the conveyor belt 205, while the rotor (not visible) can be installed on the edge of the support structure 220.

However, it is not excluded that in other embodiments, the actuation members of the first powder dispensing device 120A can comprise any other mechanism adapted to actuate the linear sliding of the support structure 220 along the rectilinear guides 225, for example a rotary electric motor and a transmission system adapted to transform the rotary motion of the motor into a linear movement of the support structure 220.

Above the conveyor belt 205, the apparatus 210 can also comprise the dye dispensing device 125, for example a digital printing machine, which is adapted to pour/dispense the ceramic dye towards the conveyor belt 205.

The dye dispensing device 125 can also be associated with suitable actuation members adapted to move it above the conveyor belt 205 along a predetermined advancement direction C, which is preferably parallel and/or coincident with the advancement direction B of the first powder dispensing device 120A.

Along this advancement direction C, the actuation members can be adapted to move the dye dispensing device 125 with a reciprocating motion, making it cyclically perform a forward stroke followed by a return stroke.

During the forward stroke, the dye dispensing device 125 is moved in a predetermined direction (for example in the same direction in which the first powder dispensing device 120A also moves during its forward stroke) from a first endstroke position, illustrated in figure 9, to a second endstroke position, illustrated in figure 11.

During the return stroke, the dye dispensing device 125 is moved in the opposite direction from the second endstroke position back to the first endstroke position again.

To allow these movements, the dye dispensing device 125 can in turn comprise a support structure 255, for example bridge-shaped, which transversely surmounts the conveyor belt 205 and which is slidably coupled to two rectilinear guides, oriented parallel to the advancement direction C and fixed on opposite sides of the conveyor belt 205 itself.

The rectilinear guides to which the support structure 255 of the dye dispensing device 125 is coupled can be the same rectilinear guides 225 to which the support structure 220 of the first powder dispensing device 120A is coupled.

The actuation members of the dye dispensing device 125 can comprise at least one linear electric motor.

For example, the linear electric motor which actuates the dye dispensing device 125 can comprise the same stator 230 as the linear electric motor which drives the first powder dispensing device 120A, and a rotor (not visible) adapted to interact with said stator 230 and installed on the support structure 255.

However, it is not excluded that in other embodiments, the actuation members of the dye dispensing device 125 can comprise any other mechanism adapted to actuate the linear sliding of the support structure 255 along the rectilinear guides 225, for example a rotary electric motor and a transmission system adapted to transform the rotary motion of the motor into a linear movement of the support structure 255.

In further detail, the dye dispensing device 125 can comprise a movable printing head installed on the support structure 255 along a direction parallel to the support surface 100 but transverse, for example orthogonal, to the advancement direction C, which carries one or more dispensing nozzles adapted to spray the ceramic dye towards the underlying conveyor belt 205.

Alternatively, the dye dispensing device 125 can comprise a plurality of dispensing nozzles stably fixed to the support structure 255, which can be distributed in a transverse direction with respect to the advancement direction C, so as to be able to dispense the ceramic dye towards a wide strip of the conveyor belt below 205.

It should be noted that when the first powder dispensing device 120A and the dye dispensing device 125 are both in their first endstroke position or in their second endstroke position (see figs.9 and 11), they are close to each other, with the dye dispensing device 125 being located behind the first powder dispensing device 120A with respect to the advancement direction in the forward stroke.

Above the conveyor belt 205, the apparatus 210 can also comprise a second powder dispensing device 120B, for example a hopper or any other device suitable for the purpose, which is adapted to pour/dispense the ceramic powder towards the conveyor belt 205.

The second powder dispensing device 120B can also be associated with suitable actuation members adapted to move it above the conveyor belt 205 along a predetermined advancement direction D, which is preferably parallel and/or coincident with the advancement direction B of the first powder dispensing device 120A.

Along this advancement direction D, the actuation members can be adapted to move the second powder dispensing device 120B with a reciprocating motion, making it cyclically perform a forward stroke followed by a return stroke.

During the forward stroke, the second powder dispensing device 120B is moved in a predetermined direction (for example in the same direction in which the first powder dispensing device 120A also moves during its forward stroke) from a first endstroke position, illustrated in figure 9, to a second endstroke position, illustrated in figure 12.

During the return stroke, the second powder dispensing device 120B is moved in the opposite direction from the second endstroke position back to the first endstroke position again.

To allow these movements, the second powder dispensing device 120B can comprise a support structure 305, for example bridge-shaped, which transversely surmounts the conveyor belt 205 and which is slidably coupled to two rectilinear guides, oriented parallel to the advancement direction D and fixed on opposite sides of the conveyor belt 205 itself.

The rectilinear guides to which the support structure 305 of the second powder dispensing device 120B is coupled can be the same rectilinear guides 225 to which the support structure 220 of the first powder dispensing device 120A is coupled.

The actuation members of the second powder dispensing device 120B can comprise at least one linear electric motor.

For example, the linear electric motor which actuates the second powder dispensing device 120B can comprise the same stator 230 as the linear electric motor which drives the first powder dispensing device 120A, and a rotor (not visible) adapted to interact with said stator 230 and installed on the support structure 305.

However, it is not excluded that in other embodiments, the actuation members of the second powder dispensing device 120B can comprise any other mechanism adapted to actuate the linear sliding of the support structure 305 along the rectilinear guides 225, for example a rotary electric motor and a transmission system adapted to transform the rotary motion of the motor into a linear movement of the support structure 305.

It should be noted that when the first powder dispensing device 120A, the dye dispensing device 125 and the second powder dispensing device 120B are all in their first endstroke position or in their second endstroke position (see figs.9 and 12), they are close to each other, with the dye dispensing device 125 interposed between the first and second powder dispensing device 120A and 120B with respect to their advancement direction.

Thanks to this arrangement, the realisation of the soft coat 105 of ceramic powder can begin when the first powder dispensing device 120A, the dye dispensing device 125 and the second powder dispensing device 120B are all in their first endstroke position (see fig.9).

Starting from this configuration, the first powder dispensing device 120A can be actuated to perform a forward stroke towards its second endstroke position (see fig. 10) and, during this forward stroke, it can be commanded to pour the ceramic powder on the support surface 100 of the conveyor belt 205, thus realising the first layer of ceramic powder 110.

After the first powder dispensing device 120A has begun its forward stroke, for example when the first powder dispensing device 120A has completed said forward stroke, the dye dispensing device 125 can be actuated to also perform a forward stroke towards its second endstroke position (see fig. 11).

During this forward stroke, the dye dispensing device 125 can be commanded to pour the ceramic dye towards the support surface 100 of the conveyor belt 205, distributing it on the first layer of ceramic powder 110.

After the dye dispensing device 125 has begun its forward stroke, for example when the dye dispensing device 125 has completed said forward stroke, the second powder dispensing device 120B can be actuated to also perform a forward stroke towards its second endstroke position (see fig.12).

During this forward stroke, the second powder dispensing device 120B can be actuated to pour the ceramic powder towards the support surface 100 of the conveyor belt 205, realising the second layer 115 of ceramic powder above the first layer 110.

When the second powder dispensing device 120B has also completed its own forward stroke, the three dispensing devices 120A, 125 and 125B can be actuated one after the other to perform a return stroke towards the respective first endstroke positions.

During this return stroke, the first and second powder dispensing device 120A and 120B can remain inactive (i.e. not dispense the powder), while the dye dispensing device 125 can be actuated to pour the ceramic dye towards the support surface 100 of the conveyor belt 205, distributing it on the second layer of ceramic powder 115. Subsequently, the operation of the apparatus 210 can be repeated identically, superimposing any further layers of ceramic powder on the first two layers of ceramic powder 110 and 115 and distributing the ceramic dye from time to time onto each of said further layers, up to obtaining the soft coat 105 of the desired thickness.

Naturally the operation of the apparatus 210 could also take place in a different way. For example, during the forward stroke, the second powder dispensing device 120B could remain inactive (i.e. not dispense the powder) and instead be commanded to pour the ceramic powder to realise the second layer 115 during the return stroke.

Another alternative could envisage that, instead of being moved in succession, the three dispensing devices 120A, 125 and 120B are actuated to perform the forward and return strokes simultaneously, always remaining adjacent to each other.

According to this alternative, the three dispensing devices 120A, 125 and 120B could be installed on a single support structure and be associated with the same actuation members.

All these solutions share the advantage that, with a single forward stroke and a single return stroke of all the dispensing devices 120A, 125 and 120B, it is effectively possible to form two superimposed layers of powder decorated with the ceramic dye, making the realisation of the soft coat 105 particularly fast.

In other embodiments, the same advantage can be obtained by replacing the two powder dispensing devices 120A and 120B with the same number of dye dispensing devices and replacing the dye dispensing device 125 with a single powder dispensing device. In this case, the single powder dispensing device could be actuated to dispense the ceramic powder during both the forward stroke and during the return stroke, while the two dye dispensing devices could be actuated alternately, one during the forward stroke, and the other during the return stroke.

Naturally the dispensing device to be actuated (i.e. which is commanded to dispense the ceramic dye) should always be the one located behind the powder dispensing device with respect to the advancement direction during the stroke.

However, to be functionally effective this embodiment has the contraindication of being generally more expensive, due to the duplication of the dye dispensing devices. Another embodiment could envisage that the apparatus 210 comprises only the first powder dispensing device 120A and the dye dispensing device 125.

In this case, during each forward stroke, the first powder dispensing device 120A could form a layer of powder while the dye dispensing device 125 could remain inactive, and during each return stroke, the first powder dispensing device 120A could remain inactive while the dye dispensing device 125 could distribute the ceramic dye on the previously formed layer.

Compared to the previous embodiments, this solution requires a greater number of strokes and, therefore, generally longer process times, but also allows forming a stack of decorated and overlapping layers of ceramic powder.

Regardless of the specific embodiment used, it is in any case envisaged that the plant 200 can comprise an electronic control system, indicated in the drawings with 350, which is configured to control the movement and operation of the dispensing devices according to the methods described above.

In this regard, it should also be highlighted that the realisation of the soft coat 105 of ceramic powder, i.e. the movement and operation of the dispensing devices described above, can be performed while the conveyor belt 205 is stopped.

However, it is not excluded that in other embodiments, by appropriately adjusting the speeds with which the dispensing devices perform the forward and return strokes, as well as the distances travelled during such strokes, the aforementioned realisation of the soft coat 105 can occur while the conveyor belt 205 is advancing in the sliding direction A.

In any case, after the realisation of the soft coat 105 of ceramic powder, the conveyor belt 205 can advance in the sliding direction A, so as to transfer the soft coat 105 to a ceramic press 400, which is adapted to perform the pressing step so as to obtain the slab of compacted ceramic powder.

The ceramic press 400 can be a so-called continuous press, which is adapted to press the soft coat 105 of ceramic powder directly on the conveyor belt 205 while the latter is sliding.

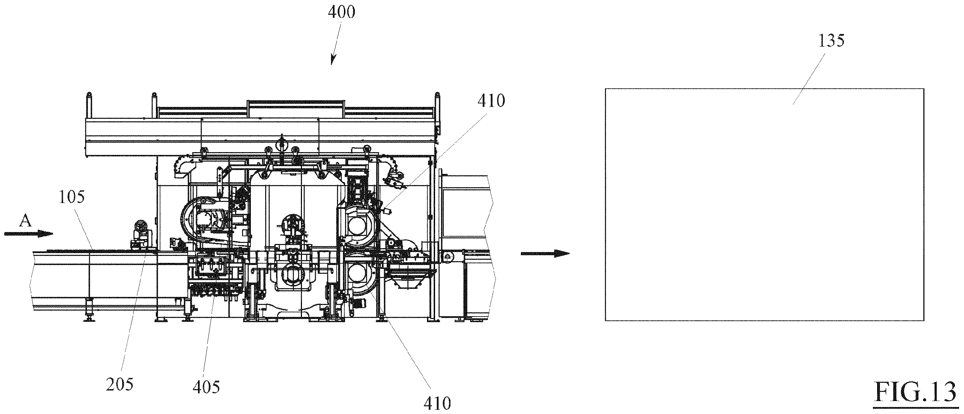

As shown in figure 13, the ceramic press 400 can for example comprise a sliding compactor belt 405, located downstream of the apparatus 210 with respect to the sliding direction A, which overlaps the conveyor belt 205 advancing in the same direction and at the same speed as the latter.

The conveyor belt 205 and the compactor belt 405 are passed through two compactor rollers 410, or through two groups of compactor rollers, which push the compactor belt 405 towards the conveyor belt 205 and allow it to press the soft coat 105 interposed between them, obtaining the compact slab 130 of pressed ceramic powder at the outlet.

In other embodiments, the ceramic press 400 could be a discontinuous press, for example of the type commercially known as GEA System or Supera Siti B&T.

In this case, the conveyor belt 205 could be stopped when the soft coat 105 of ceramic powder is at the ceramic press 400.

The ceramic press 400 could comprise pressing means which, while the soft coat 105 of ceramic powder is stationary, are able to press it directly on the conveyor belt 205.

These pressing means can comprise for example a stop plate, located above the conveyor belt 205, and suitable hydraulic systems, which are adapted to lift the portion of the conveyor belt 205 on which the soft coat 105 is located, pressing the latter against the aforementioned stop plate.

Subsequently, the conveyor belt 205 is lowered and made to advance again to distance the compacted ceramic powder slab and bring a new soft coat 105, which may have been realised by the apparatus 210, at the ceramic press 400.

The operation of the conveyor belt 205 and the operation of the ceramic press 400 according to the methods described above can be controlled by the electronic control system 350.

Downstream of the ceramic press 400, the plant 200 can further comprise a cutting device 500 adapted to cut the compact slab 130 of pressed ceramic powder, for example to trim it along the edges or to divide it into individual smaller-sized slabs.

The compact slabs 130 of pressed ceramic powder can then be sent to further operating stations (not shown) where they can be subjected to further operating steps, including for example a drying step and a possible decoration and/or glazing step.

Finally, the plant 200 comprises the ceramic furnace 135, of the conventional type and indicated in a purely schematic manner in figure 13, which is adapted to receive each compacted slab 130 and subject it to the firing stage, so as to obtain the final ceramic slab 140.

Obviously a person skilled in the art can make numerous modifications of a technical/application nature to the plant 200 and its operating method, without departing from the scope of the invention as claimed below.

## Claims

1. A method for manufacturing ceramic slabs comprising the steps of:
- realising a soft coat (105) of ceramic powder on a support surface (100),
- pressing said soft coat of ceramic powder (105) so as to obtain a compact slab (130) of pressed ceramic powder,
wherein the realisation of the soft coat (105) of ceramic powder comprises the steps of:
- forming a first layer (110) of ceramic powder on the support surface (100),
- distributing at least one ceramic dye on said first layer (110) of ceramic powder, further **characterized by**
- forming at least one second layer (115) of ceramic powder on said first layer (110) of ceramic powder, and
- distributing at least one ceramic dye on said second layer (115) of ceramic powder.

2. A method according to claim 1, wherein the ceramic dye is distributed on each layer (110, 115) of ceramic powder in an amount such as to colour the ceramic powder for the entire thickness of the layer itself.

3. A method according to any one of the preceding claims, wherein the thickness of each layer (110, 115) of ceramic powder is less than or equal to 5 mm.

4. A method according to any one of the preceding claims, wherein the ceramic dye is a liquid ceramic ink.

5. A method according to any one of the preceding claims, wherein the ceramic dye is distributed on each layer (110, 115) of ceramic powder selectively to create a predetermined graphic design.

6. A method according to claim 5, wherein the graphic design created on each layer of ceramic powder (110, 115) is the same and is superimposed on the design created on each other layer (110, 115) of ceramic powder.

7. A method according to any one of the preceding claims, wherein at least one layer (110, 115) of ceramic powder is formed through the steps of:
- releasing the ceramic powder from a powder dispensing device (120) located above the support surface (100), and
- reciprocally moving said powder dispensing device (120) and said support surface (100) in a direction parallel to the support surface (100) itself

8. A method according to any one of the preceding claims, wherein at least one distribution step of the ceramic dye is obtained through the steps of:
- releasing the ceramic dye from a dye dispensing device (125) located above the support surface (100), and
- reciprocally moving said dye dispensing device (125) and said support surface (100) in a direction parallel to the support surface (100) itself.

9. A plant (200) for manufacturing ceramic slabs, comprising at least:
- a support surface (100),
- an apparatus (210) for realising a soft coat (105) of ceramic powder on said support surface (100),
- a ceramic press (400) for pressing said soft coat (105) of ceramic powder so as to obtain a compact slab (130) of pressed ceramic powder,
- a ceramic furnace (135) for receiving the compact slab (130) of pressed ceramic powder and subject it to a firing stage,
wherein said apparatus (210) for making the soft coat (105) of ceramic powder comprises:
- means (120A) for forming a first layer (110) of ceramic powder on the support surface (100),
- means (125) for distributing at least one ceramic dye on said first layer (110) of ceramic powder, **characterized in that** it further comprises
- means (120B) for forming at least one second layer (115) of ceramic powder on said first layer (110) of ceramic powder, and
- means (125) for distributing at least one ceramic dye on said second layer (115) of ceramic powder.

10. A plant (200) according to claim 9, wherein the means for forming the first layer (110) of ceramic powder and the means for forming the second layer (115) of ceramic powder comprise at least one powder dispensing device (120A) located above the support surface (100), and movement members configured to move said powder dispensing device (120A) with a reciprocating motion along an advancement direction (B) parallel to the support surface (100), cyclically performing a forward stroke in one direction and a return stroke in the opposite direction.

11. A plant (200) according to claim 9 or 10, wherein the means for distributing the ceramic dye on the first layer (110) of powder and the means for distributing the ceramic dye on the second layer (115) of ceramic powder comprise at least one dye dispensing device (125) located above the support surface (100), and movement members configured to move said dye dispensing device (125) with a reciprocating motion along an advancement direction (B) parallel to the support surface (100), cyclically performing a forward stroke in one direction and a return stroke in the opposite direction.

12. A plant (200) according to claim 10 and 11, wherein the means for forming the first layer (110) of ceramic powder and the means for forming the second layer (115) of ceramic powder comprise two of said powder dispensing devices (120A, 120B) adapted to move in the same advancement direction (B, D), and wherein the means for distributing the ceramic dye on the first layer (110) of powder and the means for distributing the ceramic dye on the second layer (115) of ceramic powder comprise a single dye dispensing device (125), which is adapted to move in the same advancement direction (C) as the powder dispensing devices (120A, 120B) and is interposed between the latter two, with respect to said advancement direction (C).

13. A plant (200) according to claim 11, wherein said dye dispensing device (125) is a digital printing machine.

14. A plant (200) according to claim 12, wherein the movement members of the powder dispensing devices (120A, 120B) and the movement members of the dye dispensing device (125) comprise a linear electric motor.

15. A plant (200) according to any one of the claims from 9 to 14, wherein the support surface is provided by a conveyor belt (205) adapted to slide in a predetermined sliding direction (A).

16. A plant (200) according to claims 10 and 15, wherein the sliding direction (A) of the conveyor belt is parallel to the advancement direction (B) of said powder dispensing device (120A).

## Patentansprüche

1. Verfahren zum Herstellen von Keramikplatten, umfassend die folgenden Schritte:
- Herstellen einer weichen Schicht (105) aus Keramikpulver auf einer Trägerfläche (100),
- Pressen der weichen Schicht aus Keramikpulver (105), um eine kompakte Platte (130) aus gepresstem Keramikpulver zu erlangen,
wobei die Herstellung der weichen Schicht (105) aus Keramikpulver die folgenden Schritte umfasst:
- Bilden einer ersten Schicht (110) aus Keramikpulver auf der Trägerfläche (100),
- Verteilen mindestens eines keramischen Farbstoffs auf der ersten Schicht (110) aus Keramikpulver, ferner **gekennzeichnet durch**
- Bilden mindestens einer zweiten Schicht (115) aus Keramikpulver auf der ersten Schicht (110) aus Keramikpulver, und
- Verteilen mindestens eines keramischen Farbstoffs auf der zweiten Schicht (115) aus Keramikpulver.

2. Verfahren nach Anspruch 1, wobei der keramische Farbstoff auf jeder Schicht (110, 115) aus Keramikpulver in einer Menge verteilt wird, um das Keramikpulver über die gesamte Stärke der Schicht an sich zu färben.

3. Verfahren nach einem der vorherigen Ansprüche, wobei die Stärke jeder Schicht (110, 115) aus Keramikpulver weniger als oder gleich wie 5 mm ist.

4. Verfahren nach einem der vorherigen Ansprüche, wobei der keramische Farbstoff eine flüssige keramische Tinte ist.

5. Verfahren nach einem der vorherigen Ansprüche, wobei der keramische Farbstoff selektiv auf jeder Schicht (110, 115) aus Keramikpulver verteilt wird, um ein vorbestimmtes graphisches Design zu erzeugen.

6. Verfahren nach Anspruch 5, wobei das graphische Design, das auf jeder Schicht aus Keramikpulver (110, 115) erzeugt wird, gleich ist und auf dem Design überlagert ist, das auf jeder anderen Schicht (110, 115) aus Keramikpulver erzeugt wird.

7. Verfahren nach einem der vorherigen Ansprüche, wobei mindestens eine Schicht (110, 115) aus Keramikpulver durch die folgenden Schritte gebildet wird:
- Freisetzen des Keramikpulvers aus einer Pulverabgabevorrichtung (120), die sich oberhalb der Trägerfläche (100) befindet, und
- Hin- und Herbewegen der Pulverabgabevorrichtung (120) und der Trägerfläche (100) in einer Richtung parallel zu der Trägerfläche (100) an sich.

8. Verfahren nach einem der vorherigen Ansprüche, wobei mindestens ein Verteilungsschritt des keramischen Farbstoffs durch die folgenden Schritte erlangt wird:
- Freisetzen des keramischen Farbstoffs aus einer Farbstoffabgabevorrichtung (125), die sich oberhalb der Trägerfläche (100) befindet, und
- Hin- und Herbewegen der Farbstoffabgabevorrichtung (125) und der Trägerfläche (100) in einer Richtung parallel zu der Trägerfläche (100) an sich.

9. Anlage (200) zum Fertigen von Keramikplatten, mindestens umfassend:
- eine Trägerfläche (100),
- ein Gerät (210) zum Ausführen einer weichen Schicht (105) aus Keramikpulver auf der Trägerfläche (100),
- eine Keramikpresse (400) zum Pressen der weichen Schicht (105) aus Keramikpulver, um eine kompakte Platte (130) aus gepresstem Keramikpulver zu erlangen,
- einen Keramikofen (135) zum Aufnehmen der kompakten Platte (130) aus gepresstem Keramikpulver und deren Unterziehen einem Brennvorgang,
wobei das Gerät (210) zum Schaffen der weichen Schicht (105) aus Keramikpulver Folgendes umfasst:
- Einrichtungen (120A) zum Bilden einer ersten Schicht (110) aus Keramikpulver auf der Trägerfläche (100),
- Einrichtungen (125) zum Verteilen mindestens eines keramischen Farbstoffs auf der ersten Schicht (110) aus Keramikpulver, **dadurch gekennzeichnet, dass** es ferner Folgendes umfasst
- Einrichtungen (120B) zum Bilden mindestens einer zweiten Schicht (115) aus Keramikpulver auf der ersten Schicht (110) aus Keramikpulver, und
- Einrichtungen (125) zum Verteilen mindestens eines keramischen Farbstoffs auf der zweiten Schicht (115) aus Keramikpulver.

10. Anlage (200) nach Anspruch 9, wobei die Einrichtungen zum Bilden der ersten Schicht (110) aus Keramikpulver und die Einrichtungen zum Bilden der zweiten Schicht (115) aus Keramikpulver mindestens eine Pulverabgabevorrichtung (120A), die sich oberhalb der Trägerfläche (100) befindet, und Bewegungselemente, die konfiguriert sind, um die Pulverabgabevorrichtung (120A) mit einer Hin- und Herbewegung entlang einer Vorschubrichtung (B) parallel zu der Trägerfläche (100) zu bewegen, wobei sie zyklisch einen Vorwärtshub in eine Richtung und einen Rückwärtshub in die entgegengesetzte Richtung ausführen, umfassen.

11. Anlage (200) nach Anspruch 9 oder 10, wobei die Einrichtungen zum Verteilen des keramischen Farbstoffs auf der ersten Schicht (110) aus Pulver und die Einrichtungen zum Verteilen des keramischen Farbstoffs auf der zweiten Schicht (115) aus Keramikpulver mindestens eine Farbstoffabgabevorrichtung (125), die sich oberhalb der Trägerfläche (100) befindet, und Bewegungselemente, die konfiguriert sind, um die Farbstoffabgabevorrichtung (125) mit einer Hin- und Herbewegung entlang einer Vorschubrichtung (B) parallel zu der Trägerfläche (100) zu bewegen, wobei sie zyklisch einen Vorwärtshub in eine Richtung und einen Rückwärtshub in die entgegengesetzte Richtung ausführen, umfassen.

12. Anlage (200) nach Anspruch 10 und 11, wobei die Einrichtungen zum Bilden der ersten Schicht (110) aus Keramikpulver und die Einrichtungen zum Bilden der zweiten Schicht (115) aus Keramikpulver zwei der Pulverabgabevorrichtungen (120A, 120B) umfassen, die angepasst sind, um sich in der gleichen Vorschubrichtung (B, D) zu bewegen, und wobei die Einrichtungen zum Verteilen des keramischen Farbstoffs auf der ersten Schicht (110) aus Pulver und die Einrichtungen zum Verteilen des keramischen Farbstoffs auf der zweiten Schicht (115) aus Keramikpulvers eine einzige Farbstoffverteilungsvorrichtung (125) umfassen, die angepasst ist, um sich in der gleichen Vorschubrichtung (C) wie die Pulververteilungsvorrichtungen (120A, 120B) zu bewegen und in Bezug auf die Vorschubrichtung (C) zwischen den zwei letzteren angeordnet ist.

13. Anlage (200) nach Anspruch 11, wobei die Farbstoffabgabevorrichtung (125) eine digitale Druckmaschine ist.

14. Anlage (200) nach Anspruch 12, wobei die Bewegungselemente der Pulverabgabevorrichtungen (120A, 120B) und die Bewegungselemente der Farbstoffabgabevorrichtung (125) einen elektrischen Linearmotor umfassen.

15. Anlage (200) nach einem der Ansprüche 9 bis 14, wobei die Trägerfläche durch ein Förderband (205) bereitgestellt ist, das angepasst ist, um in einer vorbestimmten Gleitrichtung (A) zu gleiten.

16. Anlage (200) nach Anspruch 10 und 15, wobei die Gleitrichtung (A) des Förderbands parallel zu der Vorschubrichtung (B) der Pulverabgabevorrichtung (120A) ist.

## Revendications

1. Procédé de fabrication de dalles en céramique comprenant les étapes consistant à:
- réaliser une couche souple (105) de poudre céramique sur une surface de support (100),
- presser ladite couche souple de poudre céramique (105) de manière à obtenir une dalle compacte (130) de poudre céramique pressée,
dans lequel la réalisation de la couche souple (105) de poudre céramique comprend les étapes consistant à :
- former une première couche (110) de poudre céramique sur la surface de support (100),
- disperser au moins un colorant céramique sur ladite première couche (110) de poudre céramique, **caractérisée en outre par**
- la formation d'au moins une deuxième couche (115) de poudre céramique sur ladite première couche (110) de poudre céramique, et
- la dispersion d'au moins un colorant céramique sur ladite première couche (115) de poudre céramique.

2. Procédé selon la revendication 1, dans lequel le colorant céramique est dispersé sur chaque couche (110, 115) de poudre céramique en une quantité en sorte que la poudre céramique est colorée sur toute l'épaisseur de la couche elle-même.

3. Procédé selon l'une quelconque des revendications précédentes, dans lequel l'épaisseur de chaque couche (110, 115) de poudre céramique est inférieure ou égale à 5 mm.

4. Procédé selon l'une quelconque des revendications précédentes, dans lequel le colorant céramique est une encre céramique liquide.

5. Procédé selon l'une quelconque des revendications précédentes, dans lequel le colorant céramique est dispersé sur chaque couche (110, 115) de poudre céramique de manière sélective pour créer un graphisme prédéterminé.

6. Procédé selon la revendication 5, dans lequel le graphisme créé sur chaque couche de poudre céramique (110, 115) est le même et est superposé au dessin créé sur chaque autre couche (110, 115) de poudre céramique.

7. Procédé selon l'une quelconque des revendications précédentes, dans lequel au moins une couche (110, 115) de poudre céramique est formée au moyen des étapes suivantes :
- libérer la poudre céramique à partir d'un dispositif de dispersion de poudre (120) situé au-dessus de la surface de support (100), et
- déplacer en va-et-vient ledit dispositif de dispersion de poudre (120) et ladite surface de support (100) dans une direction parallèle à la surface de support (100) elle-même.

8. Procédé selon l'une quelconque des revendications précédentes, dans lequel au moins une étape de dispersion du colorant céramique est obtenue au moyen des étapes suivantes :
- libérer le colorant céramique à partir d'un dispositif de dispersion de colorant (125) situé au-dessus de la surface de support (100), et
- déplacer en va-et-vient ledit dispositif de dispersion de colorant (125) et ladite surface de support (100) dans une direction parallèle à la surface de support (100) elle-même.

9. Installation (200) de fabrication de dalles en céramique, comprenant au moins :
- une surface de support (100),
- un appareil (210) permettant de réaliser une couche souple (105) de poudre céramique sur ladite surface de support (100),
- une presse à céramique (400) permettant de presser ladite couche souple (105) de poudre céramique de manière à obtenir une plaque compacte (130) de poudre céramique pressée,
- un four à céramique (135) permettant de recevoir la dalle compacte (130) de poudre céramique pressée et la soumettre à une étape de cuisson,
dans lequel ledit appareil (210) de fabrication de la couche souple (105) de poudre céramique comprend :
- des moyens (120A) permettant de former une première couche (110) de poudre céramique sur la surface de support (100),
- des moyens (125) permettant de disperser au moins un colorant céramique sur ladite première couche (110) de poudre céramique, **caractérisés en ce qu'**il comprend en outre
- des moyens (120B) permettant de former au moins une deuxième couche (115) de poudre céramique sur ladite première couche (110) de poudre céramique, et
- des moyens (125) permettant de disperser au moins un colorant céramique sur ladite première couche (115) de poudre céramique.

10. Installation (200) selon la revendication 9, dans laquelle les moyens permettant de former la première couche (110) de poudre céramique et les moyens permettant de former la deuxième couche (115) de poudre céramique comprennent au moins un dispositif de dispersion de poudre (120A) situé au-dessus de la surface de support (100), et des éléments de mouvement configurés pour déplacer ledit dispositif de dispersion de poudre (120A) avec un mouvement de va-et-vient le long d'une direction d'avancement (B) parallèle à la surface de support (100), en effectuant de manière cyclique une course vers l'avant dans une direction et une course de retour dans la direction opposée.

11. Installation (200) selon la revendication 9 ou 10, dans laquelle les moyens permettant de disperser le colorant céramique sur la première couche (110) de poudre céramique et les moyens permettant de disperser le colorant céramique sur la deuxième couche (115) de poudre céramique comprennent au moins un dispositif de dispersion de colorant (125) situé au-dessus de la surface de support (100), et des éléments de mouvement configurés pour déplacer ledit dispositif de dispersion de colorant (125) avec un mouvement de va-et-vient le long d'une direction d'avancement (B) parallèle à la surface de support (100), en effectuant de manière cyclique une course vers l'avant dans une direction et une course de retour dans la direction opposée.

12. Installation (200) selon la revendication 10 et 11, dans laquelle le moyen permettant de former la première couche (110) de poudre céramique et le moyen permettant de former la deuxième couche (115) de poudre céramique comprennent deux desdits dispositifs de dispersion de poudre (120A, 120B) adaptés pour se déplacer dans la même direction d'avancement (B, D), et dans laquelle les moyens permettant de disperser le colorant céramique sur la première couche (110) de poudre et les moyens permettant de disperser le colorant céramique sur la deuxième couche (115) de poudre céramique comprennent un seul dispositif de dispersion de colorant (125), qui est adapté pour se déplacer dans la même direction d'avancement (C) que les dispositifs de dispersion de poudre (120A, 120B) et est interposé entre ces deux derniers, par rapport à ladite direction d'avancement (C).

13. Installation (200) selon la revendication 11, dans laquelle le dispositif de dispersion de colorant (125) est une machine à impression numérique.

14. Installation (200) selon la revendication 12, dans laquelle les éléments de mouvement des dispositifs de dispersion de poudre (120A, 120B) et les éléments de mouvement du dispositif de dispersion de colorant (125) comprennent un moteur électrique linéaire.

15. Installation (200) selon l'une quelconque des revendications de 9 à 14, dans laquelle la surface de support est constituée par un convoyeur à courroie (205) adapté pour coulisser dans une direction de coulissement prédéterminée (A).

16. Installation (200) selon les revendications 10 et 15, dans laquelle la direction de glissement (A) du convoyeur à courroie est parallèle à la direction d'avancement (B) dudit dispositif de dispersion de poudre (120A).
